**Europäisches Patentamt**

**European Patent Office**

**Office européen des brevets**

(19)

(11) Veröffentlichungsnummer: **0 131 686**

**B1**

(12) # EUROPÄISCHE PATENTSCHRIFT

(45) Veröffentlichungstag der Patentschrift:
04.11.87

(51) Int. Cl.⁴: **A 01 F 29/06**

(21) Anmeldenummer: **84103264.2**

(22) Anmeldetag: **24.03.84**

(54) Häcksler.

(30) Priorität: **11.07.83 DD 252938**

(43) Veröffentlichungstag der Anmeldung:
**23.01.85 Patentblatt 85/4**

(45) Bekanntmachung des Hinweises auf die Patenterteilung:
**04.11.87 Patentblatt 87/45**

(84) Benannte Vertragsstaaten:
**AT BE CH DE FR GB IT LI NL**

(56) Entgegenhaltungen:
**EP-A-0 119 307**
**DE-C-955 370**
**FR-A-1 052 091**
**FR-A-2 345 067**
**GB-A-624 826**

(73) Patentinhaber: **VEB KOMBINAT FORTSCHRITT LANDMASCHINEN, Berghausstrasse 1, DDR- 8355 Neustadt in Sachsen (DD)**

(72) Erfinder: **John, Günter, Dipl.- Ing., Fr.- Engels- Strasse 46, DDR- 8355 Neustadt (DD)**
Erfinder: **Kretschmer, Karl- Heinz, Dipl.- Ing., Bruno- Dietze- Ring 28, DDR- 8355 Neustadt (DD)**
Erfinder: **Schumacher, Horst, Dipl.- Ing., Laubigtweg 5b, DDR- 8353 Langburkersdorf (DD)**
Erfinder: **Röllich, Jürgen, Hauptstrasse 22, DDR- 8361 Ehrenberg (DD)**

(74) Vertreter: **Riederer, Conrad A., Dr., Bahnhofstrasse 10, CH- 7310 Bad Ragaz (CH)**

EP 0 131 686 B1

## Beschreibung

Die Erfindung betrifft einen Häcksler mit einer in einem Gehäuse angeordneten Häckseltrommel, die mit Messern oder dergleichen und mit Luftförderelementen bestückt ist.

In der älteren, aber nachveröffentlichten europäischen Patentanmeldung EP-A 0 119 307 wird ein Kleinschredder für Gartenabfälle beschrieben, der eine mit Messern bestückte Trommel aufweist, bei der auf beiden Seiten ringförmige Scheiben mit Ventilatorflügeln vorgesehen sind. Diese erzeugen einen Luftstrom von den stirnseitigen Enden der Trommel gegen deren axiale Mitte. Dadurch soll seitlich nach aussen drängendes Material gegen die Mitte zurückgeschleudert und so verhindert werden, dass zu zerkleinerndes Gut zu den Lagern der Trommel gelangt. Besonders dann, wenn sich im zu zerkleinernden Gut langfaseriges Material, z. B. Gras, befindet, könnten sich immer grösser werdende Wickel um die Trommelwelle bilden, die dann binnen kurzem eine Verstopfung verursachen. Dies hätte zur Folge, dass der Motor die Last nicht mehr bewältigen könnte, heisslaufen und beschädigt würde.

Viele der bekannten Feldhäcksler besitzen eine sogenannte Schneidwurftrommel, welche das Erntegut zerkleinert und dann entsprechend ihrer Geschwindigkeit aus einem Auswurfkrümmer hinausschleudert. Diese Trommelhäcksler haben jedoch den Nachteil, dass die Wurfweite von der Drehzahl der Schneidtrommel abhängt, wobei bei einer im Bereich der optimalen Schnittgeschwindigkeit liegenden Drehzahl die Förderwirkung der Schneidwurftrommel oft ungenügend ist. Man ist deshalb gezwungen, die Drehzahl der Schneidtrommel höher anzusetzen als die optimale Schneidgeschwindigkeit, damit für ein vollständiges Beladen des Erntewagens eine ausreichende Wurfweite erzielt wird. Trotzdem reicht bei Häckselgut mit geringer Schwebegeschwindigkeit, wie Welkgut oder Heu, die Förderwirkung der Schneidtrommel nicht aus.

Der Trommelfeldhäcksler gemäss der deutschen Gebrauchsmusterschrift 1 986 843 sieht deshalb vor, dass die Schneidtrommel mit Schaufeln versehen ist, die eine Gebläsewirkung erzeugen. Beim Häcksler gemäss der deutschen Patentschrift 955 370 sind dagegen seitlich an der Häckseltrommel radial verlaufende Gebläseflügel ausgebildet. Diese Massnahmen haben den Vorteil, dass die Förderung des Häckselgutes durch eine zusätzliche Luftströmung unterstützt wird. Der Häcksler eignet sich daher gut für die Verarbeitung von Welkgut oder Heu. Nachteilig ist jedoch, dass der Leistungsbedarf des Häckslers bei seiner Verwendung für schwere Häckselgüter unverhältnismässig gross wird, da einerseits bereits für die Beschleunigung des schweren Häckselgutes viel Energie notwendig ist und andererseits zusätzlich Luft gefördert wird, die aber bei schwerem Häckselgut, wie z. B.

Frischfutter oder Mais, gar nicht nötig ist. Ein weiterer Nachteil der bekannten Häcksler besteht darin, dass der Wirkungsgrad der Gebläseschaufeln relativ gering ist, weil die verwendeten Schaufelformen funktionelle Nachteile besitzen.

Es ist Aufgabe der vorliegenden Erfindung, einen Häcksler zu schaffen, der für jedes Häckselgut, leichtes und schweres, eine gute Förderwirkung aufweist und einen relativ niedrigen Gesamtleistungsbedarf besitzt.

Gemäss der Erfindung besitzt der Häckser eine in einem Gehäuse angeordnete Häckseltrommel, die mit Messern oder dgl. und mit Luftförderelementen bestückt ist, dadurch gekennzeichnet, dass die Luftförderelemente in verschiedenen Stellungen mit Befestigungsmitteln arretierbar oder von der Häckseltrommel lösbar sind, um die Luftförderelemente wahlweise zu aktivieren oder inaktivieren. Die Erfindung macht sich also die Erkenntnis zu Nutze, dass die Luftförderung bei der Verwendung des Häckslers für schwere Häckselgüter zur Förderung des Häckselgutes nichts oder nur wenig beiträgt, aber den Gesamtleistungsbedarf des Häcksler erheblich erhöht. Wie der vorbekannte Stand der Technik zeigt, lag diese Erkenntnis keineswegs nahe. Der Häcksler gemäss der Erfindung erlaubt hingegen, die Luftförderelemente ausser Betrieb zu setzen, wenn das Häckselgut eine genügend grosse Schwebegeschwindigkeit besitzt.

Gemäss einer vorteilhaften Ausbildung des Häckslers weisen die Luftförderelemente einen Drehpunkt auf um den sie verschwenkbar sind. Wird also keine Luftförderung benötigt, so können die Luftförderelemente nach aussen gedreht werden, so dass sie keine Förderwirkung mehr besitzen. Es ist aber auch eine Ausbildung denkbar, bei der die Luftförderelemente in eine Zwischenstellung verschwenkbar sind, die eine verminderte Luftförderung und somit auch einen verminderten Leistungsbedarf zur Folge hat.

Zweckmässigerweise haben die Luftförderelemente die Form von Schaufeln, die eine Krümmung aufweisen, wobei jeweils das innere Ende der Schaufel praktisch tangential zu einem Kreis mit praktisch der Hälfte des Durchmessers der Häckseltrommel verläuft, währenddem das äussere Ende der Schaufel praktisch radial verläuft. Mit dieser Ausbildung wird eine gute Luftansaugung durch die Luftförderelemente gewährleistet.

Die Luftförderelemente sind auf mindestens einer Seite der Häckseltrommel angeordnet. Es ist aber vorteilhaft, auf beiden Seiten der Häckseltrommel Luftförderelemente vorzusehen. Die Anordnung an der Seite der Häckseltrommel bringt gegenüber einer Anordnung im Innern der Häckseltrommel eine erhebliche konstruktive Vereinfachung. Von besonderem Vorteil ist es, wenn die Länge der Luftförderelemente so bemessen ist, dass diese in der inaktivierten Lage praktisch aneinander angrenzen und einen Kranz bilden. Dieser Kranz bildet dann innerhalb des Gehäuses eine Abgrenzung, die ein Herausfallen von Häckselgut aus den normalerweise seitlich angeordneten Luftansaugöffnungen verhindert. Zu diesem Zweck besitzt der Kranz inaktivierter Luftförderelemente einen grösseren Radius als der äussere Begrenzungsradius der Luftansaugöffnungen. Der Kranz weist vorteilhaft den gleichen Radius aus, wie der Krümmungsradius der Schaufeln. In diesem Falle bildet der Kranz einen geschlossenen Zylindermantel, der nur äusserst minime Luftreibungsverluste bei der Rotation der Häckseltrommel verursacht.

Ein vorteilhaftes Ausführungsbeispiel der Erfindung sieht vor, dass die Luftförderelemente auf einer Scheibe befestigt sind, die mit der Häckseltrommel kuppelbar ist, um die Luftförderelemente zu aktivieren, bzw. entkuppelbar ist, um die Luftförderelemente zu inaktivieren. Diese Anordnung vereinfacht das Stillsetzen der Luftförderelemente. Die Luftförderelemente bilden mit der Scheibe einen Radiallüfter, der dann als Einheit mit der Häckseltrommel gekuppelt werden kann. Es ist vorteilhaft, eine Scheibe mit Luftförderelementen auf jeder Seite der Häckseltrommel vorzusehen.

Unabhängig von der Ausführungsform der Erfindung besteht der Hauptvorteil der Erfindung darin, dass die zusätzliche Luftförderung je nach Bedarf in Betrieb genommen, bzw. stillgesetzt werden kann. Damit wird der Gesamtleistungsbedarf gegenüber den bekannten Lösungen erheblich gesenkt. Es ist ferner möglich, die Arbeitsdrehzahl der Häckseltrommel zu senken, bzw. der optimalen Schnittgeschwindigkeit anzupassen. Dies bewirkt eine zusätzliche Leistungseinsparung und einen verschleissarmen Betrieb. Mit reduzierter Schnittgeschwindigkeit wird auch der Lärmpegel merklich gesenkt. Durch die erfindungsgemässe Gestaltung der Luftförderelemente wird ferner ein guter Wirkungsgrad der Gebläse erreicht.

Nachstehend werden Ausführungsbeispiele der Erfindung näher erläutert. Es zeigt:

Fig. 1 einen Schnitt durch das Gehäuse mit einer Seitenansicht der Häckseltrommel,

Fig. 2 einen Axialschnitt durch das Gehäuse mit einer Vorderansicht der Häckseltrommel nach Figur 1,

Fig. 3 eine Seitenansicht wie in Figur 1, jedoch mit verschwenkten Luftförderelementen,

Fig. 4 ein zweites Ausführungsbeispiel, mit einem Schnitt durch das Gehäuse, wobei die Häckseltrommel teilweise sichtbar ist und wo die Luftförderelemente auf einer Scheibe befestigt sind, die mit der Häckseltrommel kuppelbar ist,

Fig. 5 eine Darstellung wie in Figur 4, jedoch mit ausser Betrieb gesetzten Luftförderelementen.

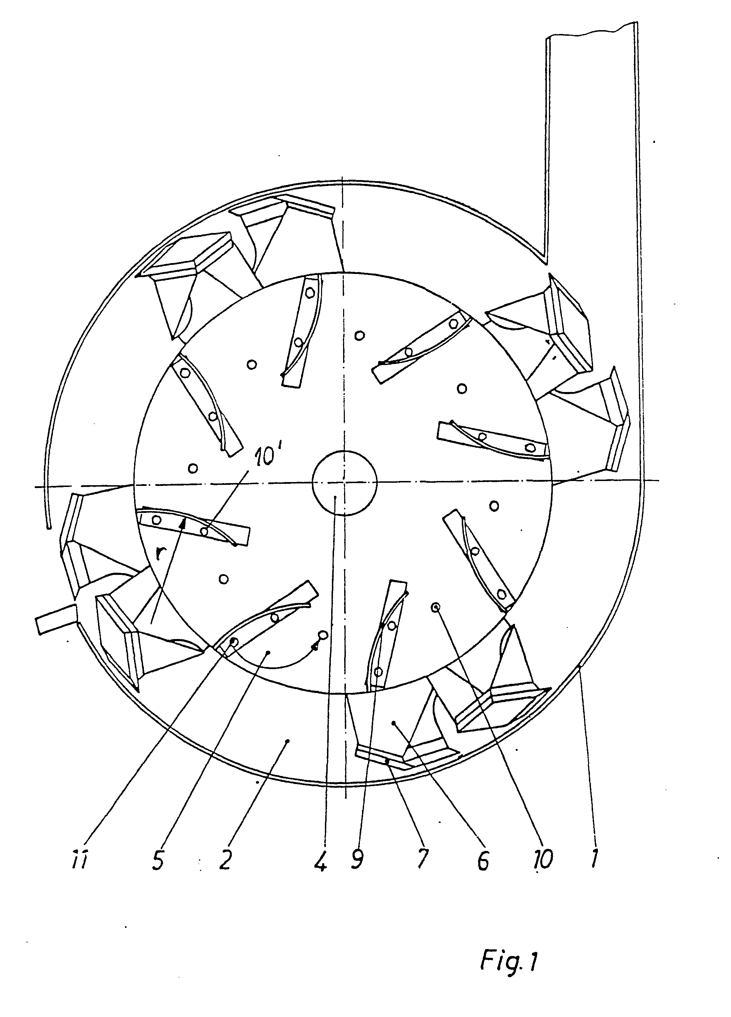

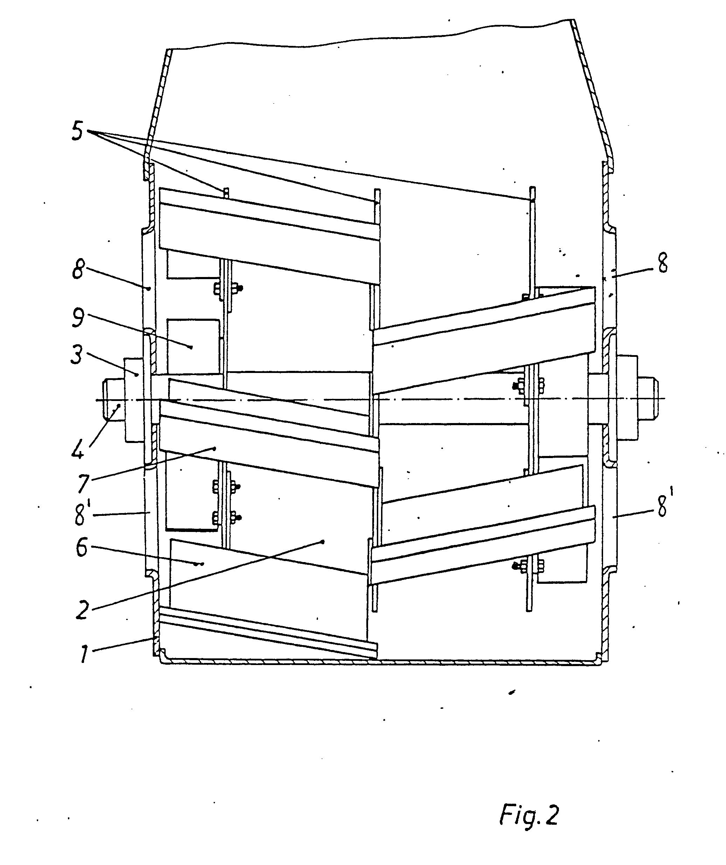

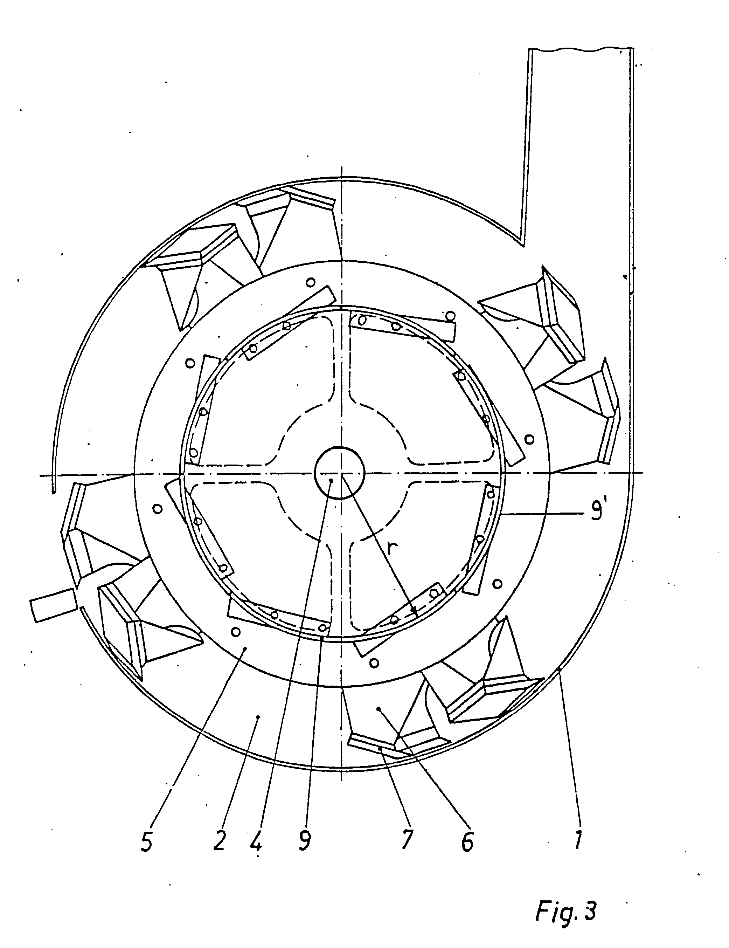

Wie die Figuren 1 und 2 zeigen, ist in einem Gehäuse 1 eine Häckseltrommel 2 mit Lagern 3 auf ihrer Trommelwelle 4 gelagert. Die Häckseltrommel 2 besteht beim gezeigten Ausführungsbeispiel aus drei in Abstand voneinander angeordneten Trommelscheiben 5, die die Messerbalken 6 mit den Messern 7 tragen. Beim gezeigten Ausführungsbeispiel sind die Messer 7 mittig geteilt und pfeilförmig angeordnet. Statt Messer 7 können aber auch andere geeignete Mittel, z. B. Schlagleisten, vorgesehen sein. Im Gehäuse 1 sind auf beiden Seiten nahe bei den Lagern 3 Luftansaugöffnungen 8 eingelassen. Auf den äusseren Trommelscheiben 5 sind an deren Aussenseiten Luftförderelemente 9 aufgeschraubt oder auf andere Weise lösbar angeordnet. Von besonderem Vorteil ist jedoch, wenn die Luftförderelemente um die Achse 10′ verschwenkbar sind. Die Luftförderelemente 9 haben die Form von Schaufeln und sind gekrümmt ausgebildet. Die Krümmung r entspricht dabei dem Radius r des aus den Luftförderelementen 9 bildbaren Kranzes 9′ von Fig. 3. Es sind aber auch andere Bemessungen möglich. Das innere Ende des schaufelförmigen Luftelementes 9 ist praktisch tangential zu einem Kreis mit praktisch der Hälfte des Durchmessers der Häckseltrommel 2 angeordnet. Demgegenüber verläuft das äussere Ende des Luftförderelementes 9 praktisch radial. In dieser in Fig. 1 dargestellten Stellung der Luftförderelemente erzeugen diese eine maximale Luftströmung zur Förderung von relativ leichtem Häckselgut.

Wie aus Figur 1 ersichtlich ist, sind in den Trommelscheiben 5 auf einem inneren Teilkreis Aufnahmebohrungen 10 eingebracht. Nach dem Lösen der äusseren Verschraubungen 11 können daher die Luftförderelemente 9 in den Aufnahmebohrungen 10 befestigt werden, wie dies aus Figur 3 ersichtlich ist. Die Luftförderelemente 9 sind dabei so bemessen, dass sie in dieser Lage praktisch aneinander angrenzen und einen Kranz 9′ bilden, der die Form eines geschlossenen Zylindermantels besitzt. In dieser Stellung erzeugen die Luftförderelemente keinen Luftstrom. Der Zylindermantel besitzt dabei einen so grossen Durchmesser, dass die Luftansaugöffnungen 8 innerhalb dieses Zylindermantels 9′ liegen. Da die Luftförderelemente 9 seitlich nur geringes Spiel zum Gehäuse aufweisen, wird durch den geschlossenen Zylindermantel 9′ eine Luftansaugung durch die Luftansaugöffnungen 8 und ein Austreten von Häckselgut durch diese Luftansaugöffnungen 8 verhindert.

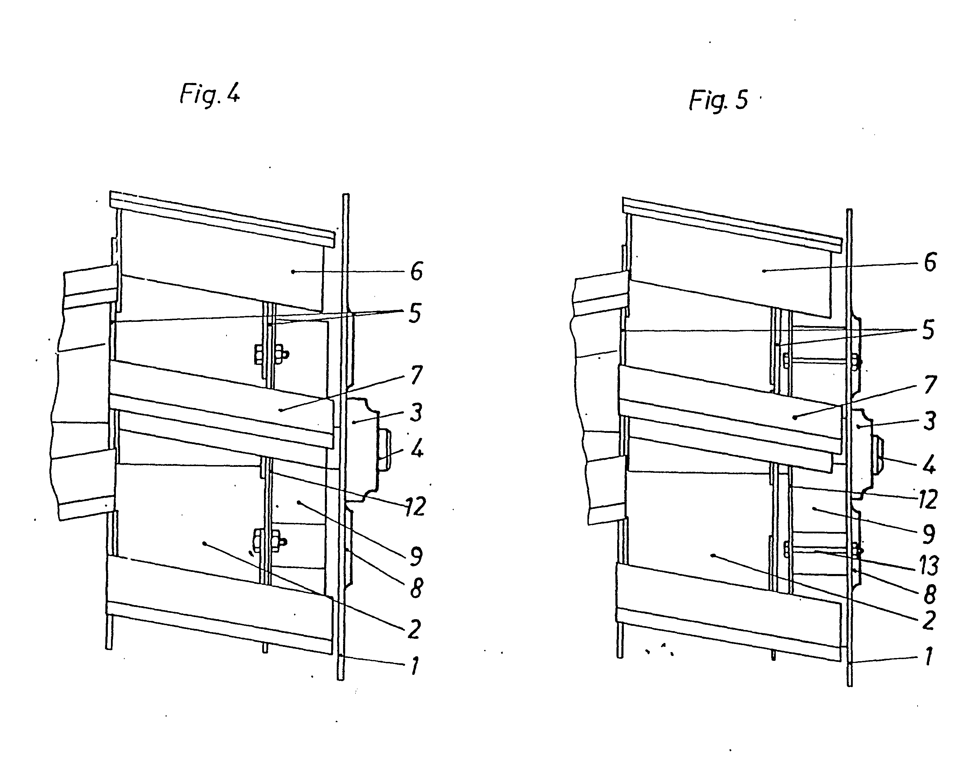

Beim Ausführungsbeispiel gemäss den Figuren 4 und 5 sind die Luftförderelemente 9 auf einer Scheibe 12 befestigt. Die Luftförderelemente 9 befinden sich dabei in einer Lage, wie sie in Figur 1 dargestellt ist. Beim Drehen der Trommel 2 wird daher ein Luftstrom erzeugt. Wird kein Luftstrom benötigt, so kann die Scheibe 12 von der Trommel 2 gelöst werden, so dass sie von der Häckseltrommel 2 nicht mehr mitgenommen wird. Es findet dann ebenfalls keine Luftförderung mehr statt. Zur Sicherung der Scheibe 12 kann diese beispielsweise durch Schrauben 13 mit dem Gehäuse 1 verbunden werden.

## Patentansprüche

1. Häcksler mit einer in einem Gehäuse (1) angeordneten Häckseltrommel (2), die mit Messern (7) oder dergleichen und mit Luftförderelementen (9) bestückt ist, dadurch gekennzeichnet, dass die Luftförderelemente (9) in verschiedenen Stellungen mit Befestigungsmitteln (11) arretierbar oder von der Häckseltrommel (2) lösbar sind, um die Luftförderelemente (9) wahlweise zu aktivieren oder inaktivieren.

2. Häcksler nach Anspruch 1, dadurch gekennzeichnet, dass die Luftförderelemente (9) einen Drehpunkt (10') aufweisen, um den sie verschwenkbar sind.

3. Häcksler nach einem der Ansprüche 1 oder 2, dadurch gekennzeichnet, dass die Luftförderelemente (9) die Form von Schaufeln haben, die eine Krümmung (r) aufweisen, wobei jeweils das innere Ende der Schaufel praktisch tangential zu einem Kreis mit praktisch der Hälfte des Durchmessers der Häckseltrommel (2) verläuft, während dem das äussere Ende der Schaufel (9) praktisch radial verläuft.

4. Häcksler nach einem der Ansprüche 1 bis 3, dadurch gekennzeichnet, dass die Luftförderelemente (9) auf mindestens einer Seite der Häckseltrommel (2) angeordnet sind.

5. Häcksler nach einem der Ansprüche 1 bis 4, dadurch gekennzeichnet, dass die Länge der Luftförderelemente (9) so bemessen ist, dass diese in der inaktivierten Lage praktisch aneinander grenzen und einen Kranz (9') bilden.

6. Häcksler nach Anspruch 5, mit mindestens einer seitlich am Gehäuse (1) angeordneten Luftansaugöffnung (8), dadurch ggekennzeichnet, dass der Kranz (9') inaktivierter Luftförderelemente (9) einen grösseren Radius (r) aufweist als der äussere Begrenzungsradius der Luftansaugöffnung (8).

7. Häcksler nach Anspruch 6, dadurch gekennzeichnet, dass der Kranz (9') praktisch den gleichen Radius (r) aufweist, wie der Krümmungsradius (r) der Schaufeln.

8. Häcksler mit einer in einem Gehäuse (1) angeordneten Häckseltrommel (2), die mit Messern (7) bestückt ist, und mit einer mit Luftförderelementen (9) versehenen Scheibe (12), dadurch gekennzeichnet, dass die Scheibe (12) mit der Häckseltrommel (2) kuppelbar ist, um die Luftförderelemente (9) zu aktivieren, bzw. entkuppelbar ist, um die Luftförderelemente (9) zu inaktivieren.

9. Häcksler nach Anspruch 8, dadurch gekennzeichnet, dass eine Scheibe (12) mit Luftförderelementen (9) auf jeder Seite der Häckseltrommel (2) vorgesehen ist.

## Claims

1. Chaff cutter with a chaff-cutting drum (2), which is arranged in a housing (1) and equipped with knives (7) or the like and with air-conveying elements (9), characterised thereby, that the air-conveying elements (9) are arrestable in different settings by fastening means (11) or detachable from the chaff-cutting drum (2) in order to activate or deactivate the air-conveying elements selectably.

2. Chaff cutter according to claim 1, characterised thereby, that the air-conveying elements (9) display a rotational centre (10'), about which they are pivotable.

3. Chaff cutter according to one of the claims 1 or 2, characterised thereby, that the air-conveying elements (9) have the shape of vanes which display a curvature (r), wherein the inner end of the vane each time extends practically tangentially to a circle of practically half the diameter of the chaff-cutting drum (2), while the outer end of the vane extends practically radially.

4. Chaff cutter according to one of the claims 1 to 5, characterised thereby, that the air-conveying elements (9) are arranged on at least one side of the chaff-cutting drum (2).

5. Chaff cutter according to one of the claims 1 to 4, characterised thereby, that the length of the air-conveying elements (9) is so dimensioned that these in the deactivated position practically one adjoin the other and form a rim (9').

6. Chaff cutter according to claim 5, with at least one air induction opening (8) arranged laterally at the housing (1), characterised thereby, that the rim (9') of deactivated air-conveying elements (9) displays a greater radius (4) than the outer boundary radius of the air induction opening (8).

7. Chaff cutter according to claim 6, characterised thereby, that the rim (9') displays practically the same radius (r) as the radius of curvature (r) of the vanes.

9. Chaff cutter with a chaff-cutting drum (2), which is arranged in a housing (1) and equipped with knives (7), and with a disc (12) provided with air-conveying elements (9), characterised thereby, that the disc (12) is couplable with the chaff-cutting drum (2) in order to activate the air-conveying elements (9) or disengageable therefrom in order to deactivate the air-conveying elements (9).

9. Chaff cutter according to claim 5, characterised thereby, that a disc (12) with air-conveying elements (9) is provided on each side of the chaff-cutting drum (2).

## Revendications

1. Hachoir comportant un tambour de hachage (2), disposé dans un caisson (1) et qui comporte des lames (7) ou accessoires analogues et des éléments d'entraînement (9) par l'air, hachoir caractérisé en ce que ces éléments d'entraînement (9) par l'air peuvent être bloqués dans des positions differentes, au moyen d'organes de fixation (11), ou peuvent être détachés du tambour (2) de hachage pour que l'on puisse, au choix, activer ou désactiver ces éléments d'entraînement (9) par l'air.

2. Hachoir suivant la revendication 1, caractérisé en ce que les éléments d'entraînement (9) par l'air possèdent un centre (10') de rotation sur lequel on peut les faire tourner.

3. Hachoir suivant l'une des revendications 11 ou 2, caractérisé en ce que les éléments d'entraînement (9) par l'air ont la forme de palettes qui présentent une courbure (r), l'extrémité intérieure de cette palette s'étendant pratiquement tangentiellement à un cercle dont le diamètre est pratiquement la moitié de celui du tambour (2) de hachage, pendant que l'extrémité extérieure de cette palette (9) s'étend pratiquement radialement.

4. Hachoir suivant l'une des revendications 1 à 3, caractérisé en ce que les éléments d'entraînement (9) par l'air sont disposés sur au moins une face du tambour de hachage (2).

5. Hachoir suivant l'une des revendications 1 à 4, caractérisé en ce que la longueur des éléments d'entraînement (9) par l'air est calculée de façon telle que ces éléments se rejoignent, dans la position d'inactivation, les uns avec les autres, et forment une couronne (9').

6. Hachoir suivant la revendication 5, comportant au moins un orifice d'aspiration d'air (8), disposé sur le coté du caisson (1), caractérisé en ce que la couronne (9') d'éléments d'entraînement par l'air (9) inactivés, présente un rayon (r) plus grand que le rayon extérieur qui limite les orifices (8) d'aspiration d'air.

7. Hachoir suivant la revendication 8, caractérisé en ce que la couronne (9') presente un rayon (r) qui est pratiquement le même que le rayon (r) de courbure des palettes.

8. Hachoir comportant un tambour (2) de hachage disposé dans un caisson (1), qui est garni de lames (7) et comporte un disque (12) pourvu d'éléments d'entraînement (9) par l'air, caractérisé en ce que le disque (12) peut être accouplé avec le tambour (2) de hachage, afin d'activer les éléments d'entraînement (9) par l'air, ou désaccouplé afin de rendre inactifs ces éléments d'entraînement (9).

9. Hachoir suivant la revendication 8, caractérisé en ce qu'il est prévu un disque (12) avec des éléments d'entraînement (9) par l'air sur chacune des faces du tambour (2) de hachage.

Fig. 1

Fig.2

Fig. 3

Fig. 4

Fig. 5

6
5
7
3
4
12
9
8
2
1

6
5
7
3
4
12
9
13
8
2
1

0 131 686